# EUROPÄISCHE PATENTSCHRIFT

(11) **EP 1 457 399 B1**
(45) Veröffentlichungstag und Bekanntmachung des Hinweises auf die Patenterteilung: **18.01.2006**
(21) Anmeldenummer: 04005721.8
(22) Anmeldetag: 10.03.2004
(51) Int. Cl.: B60T 8/88

(54) **Initialisierungsverfahren für eine Datenbusanordnung**
Initialization method for a data bus
Procédé d'initialisation pour un bus de données

(30) Priorität: 10.03.2003 DE 10310302
(43) Veröffentlichungstag der Anmeldung: 15.09.2004
(73) Patentinhaber: KNORR-BREMSE SYSTEME FÜR NUTZFAHRZEUGE GMBH, 80809 München (DE)
(72) Erfinder: Arlt, Andreas, 70499 Stuttgart (DE); Gebele, Markus, 71706 Markgröningen (DE); Herges, Michael, 70825 Korntal-Münchingen (DE); Katona, Peter, 1121 Budapest (HU); Klement, Roland, 82407 Haunshofen (DE); Wörner, Dieter, 75031 Eppingen (DE); Gscheidle, Wolfgang, 71720 Oberstenfeld (DE)

(56) Entgegenhaltungen:
- DE-A- 10 044 309
- DE-A- 19 733 760
- DE-C- 19 931 838

## Beschreibung

### Stand der Technik

Die Erfindung geht aus von einem Initialisierungsverfahren für eine Datenbusanordnung, insbesondere eines Bremssystems eines Fahrzeugs nach Anspruch 1.

Komponenten von Nutzfahrzeugbremssystemen, wie beispielsweise Bremssteuergeräte oder Druckregelmoduin sind heutzutage in eine Datenbusanordnung eingebunden, welche beispielsweise eine lineare Struktur aufweist, d.h. die einzelnen Teilnehmer sind in einer Reihenschaltung hintereinander angeordnet. An den beiden Enden der Datenbusleitungen ist jeweils ein Busabschlußwiderstand vorhanden. Zusätzlich sind Versorgungsleitungen vorgesehen zur Stromversorgung der Teilnehmer. Jeder Teilnehmer der Datenbusanordnung muss nach dem Einbau einmalig und einzeln initialisiert werden. Dies kann durch sequentielles Zuschalten der Teilnehmer und anschließendem Senden eines Initialisierungssignals innerhalb eines Zeitrasters erfolgen. Defekte an Datenbusleitungen, an Datenbusanschlüssen, an Versorgungsleitungen, an Versorgungsspannungsanschlüssen eines Teilnehmers oder an dem Teilnehmer selbst können jedoch dazu führen, dass eine Initialisierung der restlichen Teilnehmer nicht mehr möglich ist.

Die DE 101 53 846 A1 beschreibt ein Verfahren zur Identifizierung von baugleichen Elektronikmodulen in einer verketteten CAN-Busarchitektur, welche mittels ansteuerbarer Unterbrecherschaltungen in Segmente unterteilt ist. Das zu einem Netzwerkcontroller nächstliegende Segment ist permanent mit dem Netzwerkcontroller verbunden, während die weiteren Segmente in Form einer Reihenschaltung mittels der Unterbrecherschaltungen aneinander gereiht werden.

In der DE 100 44 309 A1 ist eine redundante Datenübertragung über Datenbus in Rechnemetzwerken beschrieben, welche eine Zusatzleitung, jeder Busknoten zwei Busschalter, einen schaltbaren Abschlusswiderstand und ein Schaltglied zwischen ersten und letzten Busknoten sowie einen Rechner aufweist, mittels welchen bei Kurzschluss, Leitungsunterbrechung oder Ausfall eines Busknotens jeder Busknoten über die zwei Busschalter paarweise und zeitlich aufeinanderfolgend mit den benachbarten Buskonten verbunden werden und anschließend durch den Rechner die Funktion der Datenkommunikation überprüft und im Schadensfall das betreffende Bussegment isoliert und über die zusätzliche Leitung der Datenverkehr wieder aufgenommen wird.

In der DE 197 33 760 A1 ist eine Datenbusleitung mit Sende- und Empfangskomponenten als Teilnehmern beschrieben, welche durch einen Datenbus in einer Ringstruktur miteinander verbunden sind, wobei im Datenbus zwischen den Teilnehmem Datenbusschaltglieder angeordnet sind und jeder Teilnehmer einen Busabschlusswiderstand aufweist. Die Teilnehmer werden durch Schalten der Datenbusschaltglieder in der einen Umlaufrichtung der Ringstruktur sequentiell initialisiert. Im Falle des Vorhandenseins eines defekten Datenbusabschnitts und/oder eines defekten Teilnehmers wird dieser Datenbusabschnitt und/oder dieser Teilnehmer durch Rückschalten der entsprechenden Datenbusschaltglieder aus der Ringstruktur eliminiert, wobei wenigstens einige der restlichen Teilnehmer durch Schalten von Datenbusschaltgliedem in der anderen Umlaufrichtung der Ringstruktur sequentiell initialisiert werden. Bei dem beschriebenen Initialisierungsverfahren werden Defekte berücksichtigt, welche Datenbusabschnitte und/oder einzelne Teilnehmer betreffen, nicht jedoch Defekte der Stromversorgung der Teilnehmer.

Der vorliegenden Erfindung liegt die Aufgabe zugrunde, ein Initialisierungsver fahren der eingangs erwähnten Art derart weiter zu entwickeln, dass die mit ihm initialisierte Datenbusanordnung noch zuverlässiger arbeitet.

Erfindungsgemäß wird diese Aufgabe durch die kennzeichnenden Merkmale von Anspruch 1 gelöst.

### Vorteile der Erfindung

Gemäß der Erfindung wird ein Initialisierungsverfahren einer ringförmigen Datenbusanordnung vorgestellt, welches auch Defekte an den Versorgungsleitungen der Teilnehmer berücksichtigt. Die Ringstruktur weist Versorgungsleitungen zur Stromversorgung der Teilnehmer auf, wobei in wenigstens einer Versorgungsleitung zwei zentrale Versorgungsschaltglieder angeordnet und für zumindest einige der Teilnehmer je ein lokales Versorgungsschaltglied angeordnet ist. Eine Initialisierung der Teilnehmer erfolgt dann durch die folgenden Schritte:
a) Eines der beiden zentralen Versorgungsschaltglieder und das der Umkaufrichtung entsprechende zentrale Datenbusschaltglied werden geschlossen,
b) das eine, dem zuletzt geschlossenen Datenbusschaltglied nächst gelegene lokale Datenbusschaltglied eines Teilnehmers wird geschlossen,
c) der zugeschaltete Datenbusabschnitt und der zugeschaltete Versorgungsleitungsabschnitt und der zugeschaltete Teilnehmer wird überprüft und falls
d) kein Fehler im zugeschalteten Datenbusabschnitt und im zugeschalteten Versorgungsleitungsabschnitt und im zugeschalteten Teilnehmer vorliegt, wird der zugeschaltete Teilnehmer initialisiert und das andere lokale Datenbusschaltglied und das lokale Versorgungsschaltglied des zugeschalteten Teilnehmers geschlossen und das Verfahren beginnend mit Schritt b) solange durchlaufen, bis sämtliche Teilnehmer initialisiert sind,
e) ein Fehler in dem zugeschalteten Datenbusabschnitt und/oder im zugeschalteten Versorgungsleitungsabschnitt und/oder im zugeschalteten Teilnehmer vorhanden ist, wird das eine Datenbusschaltglied des zugeschalteten Teilnehmers und das zuletzt geschlossene Versorgungsschaltglied wieder geöffnet, das andere zentrale Datenbusschaltglied und das andere zentrale Ver sorgungsschaltglied geschlossen und das Verfahren beginnend mit Schritt b) solange durchlaufen, bis wenigstens einige der restlichen Teilnehmer initialisiert sind.

Bei einer gemäß diesem Verfahren initialisierten Datenbusanordnung ist dann sichergestellt, dass nicht nur die in die Ringstruktur eingefügten Datenbusabschnitte sondern auch die entsprechenden Versorgungsleitungsabschnitte fehlerfrei funktionieren. Damit können Fehler beispielsweise infolge von Feuchtigkeit an Steckern oder an Übergangswiderständen vermieden und die Zuverlässigkeit der Datenbusanordnung gesteigert werden, was vor allem bei Fahrzeugbremssystemen, bei denen eine hohe Ausfallsicherheit gefordert wird, von Vorteil ist.

Durch die in den Unteransprüchen aufgeführten Maßnahmen sind vorteilhafte Weiterbildungen und Verbesserungen der in den unabhängigen Patentansprüchen angegebenen Erfindung möglich.

Besonders bevorzugt werden zumindest einige der Teilnehmer durch identische Druckregelmodule zum Regeln von Bremsdrücken gebildet und der Datenbus ist ein CAN (Controller Area Network)-Datenbus. Dann ist für jedes Druckregelmodul der Busabschlußwiderstand zwischen einer CAN-High-Leitung und einer CAN-Low-Leitung des CAN-Datenbusses geschaltet.

### Zeichnung

Ein Ausführungsbeispiel der Erfindung ist in der Zeichnung dargestellt und in der nachfolgenden Beschreibung näher erläutert. In der Zeichnung zeigt
- Fig.1: eine schematisches Schaltbild einer Datenbusanordnung eines elektro-pneumatischen Bremssystems eines Nutzfahrzeugs gemäß
- Fig.2: eine schematische Darstellung eines Druckregelmoduls als Kompo-nente der Ringstruktur von Fig.1;

### Beschreibung eines Ausführungsbeispiels

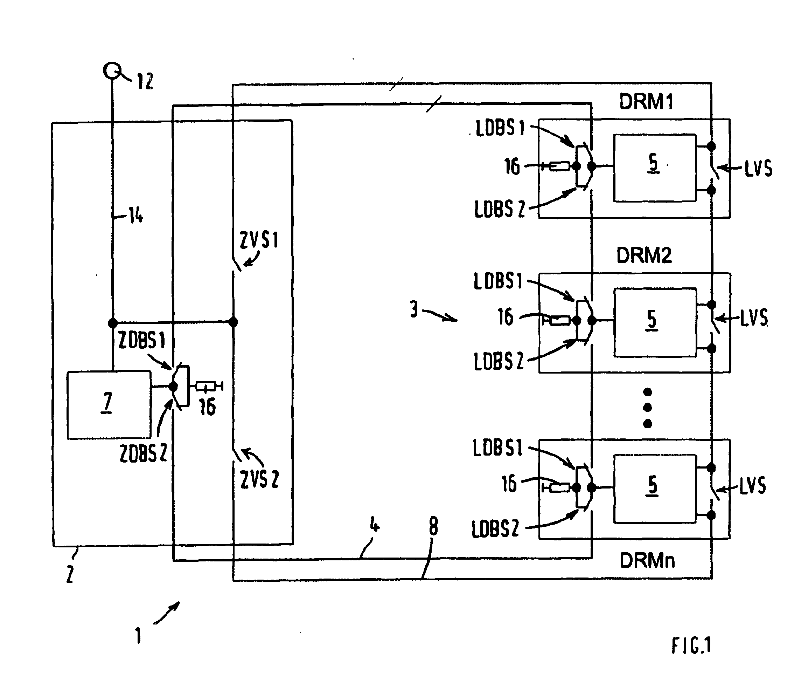

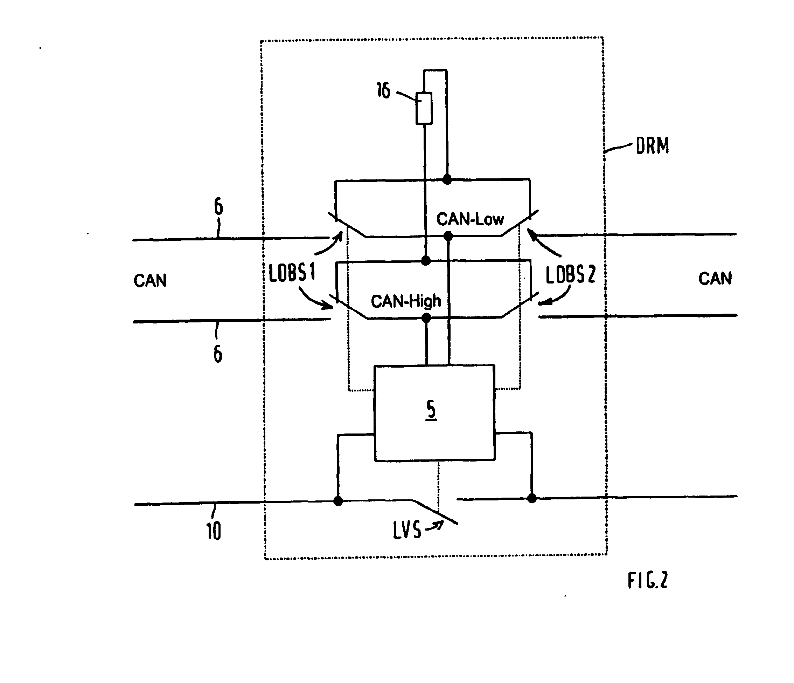

Die in Fig.1 gezeigte und insgesamt mit der Bezugszahl 1 bezeichnete Datenbusanordnung ist beispielsweise eine Datenbusanordnung eines elektro-pneumatischen Bremssystems eines Nutzfahrzeugs gemäß einer bevorzugten Ausführungsform der Erfindung. Die Datenbusanordnung 1 beinhaltet ein in einer Ringstruktur 3 angeordnetes zentrales Steuergerät 2, welches über einen Datenbus 4 eine Anzahl n weitere Teilnehmer der Ringstruktur 3, vorzugsweise Druckregelmoduln DRM₁ bis DRMₙ ansteuert und von diesen Signale, beispielsweise von Sensoren empfängt. Die Druckregelmodule DRM₁ bis DRMₙ beinhalten elektronische und elektrische Komponenten 5 wie beispielsweise einen Mikrocontroller als lokales Steuergerät für elektromagnetische Ventile und Sensoren, welche einen Signalaustausch mit dem zentralen Steuergerät führen und in Fig.1 und Fig.2 durch ein Rechteck symbolisiert sind. Weitere Details eines solchen Druckregelmoduls sind beispielsweise in der DE 42 27 084 A1 beschrieben.

Der Datenbus 4 ist vorzugsweise ein CAN(Controller Area Network)-Datenbus, bei welchem alle Teilnehmer 2, DRM₁ bis DRMₙ an einer einzigen Zweidrahtleitung 6 angeschlossen sind. Zur Ankopplung an das Busmedium wird die Sende-/Empfangsstufe eines Druckregelmoduls DRM über zwei Anschlüsse CAN-High und CAN-Low an das Buskabel angeschlossen, wie aus Fig.2 hervorgeht. Bei der eigentlichen Datenübertragung werden aufgrund der hohen Störsicherheit Differenzspannungssignale verwendet, d.h. die Spannungsdifferenz zwischen den beiden Busleitungen CAN-High und CAN-Low wird ausgewertet. Alternativ können beliebige andere Bussysteme verwendet werden. Das zentrale Steuergerät 3 und die Druckregelmoduln DRM₁ bis DRMₙ sind weiterhin in Bezug zu Versorgungsleitungen 8 ringförmig in Reihe geschaltet, um sie mit Strom zu versorgen.

Im Datenbus 4 sind Datenbusschaltglieder angeordnet, beispielsweise in Form von Relais oder von Halbleiterschaltem. Genauer sind dem zentralen Steuergerät 2 zwei zentrale Datenbusschaltglieder ZDBS₁, ZDBS₂ und den anderen Teilnehmern je zwei lokale Datenbusschaltglieder LDBS₁. LDBS₂ zugeordnet, zur Ankoppelung an die Ringstruktur 3. Aus Maßstabsgründen sind in Fig.1 nicht sämtliche Leitungen des Datenbusses 4 und nicht alle Versorgungsleitungen 8 eingezeichnet. So beinhalten die Versorgungsleitungen 8 für die in Ringstruktur 3 angeordneten Druckregelmodule DRM₁ bis DRMₙ beispielsweise eine Masseleitung und eine Versorgungsspannungsleitung 10, wobei in Fig.2 allerdings nur die Letztere dargestellt ist. In dieser Versorgungsspannungsleitung 10 sind zwei zentrale Versorgungsschaltglieder ZVS₁, ZVS₂ angeordnet und für die Druckregelmodule DRM₁ bis DRMₙ je ein lokales Versorgungsschaltglied LVS. Das zentrale Steuergerät 2 wird mittels weiterer Versorgungsleitungen 14 bestromt, von welchen die Versorgungsleitungen 8 der Ringstruktur 3 abzweigen. Vorzugsweise sind die beiden zentralen Datenbusschaltglieder ZDBS₁, ZDBS₂ und die beiden zentralen Versorgungsschaltglieder ZVS₁. ZVS₂ in das zentrale Steuergerät 2 integriert und werden von dessen Steuerelektronik 7 angesteuert. Die lokalen Datenbusschaltglieder LDBS₁ LDBS₂ und die lokalen Versorgungsschaltglieder LVS sind hingegen, wie in Fig.1 durch die umschließenden Rechtecke symbolisiert ist, vorzugsweise in die Druckregelmodule DRM₁ bis DRMₙ integriert. Sämtliche lokalen und zentralen Datenbusschaltglieder LDBS₁, LDBS₂ bzw. ZDBS₁, ZDBS₂ sowie sämtliche lokalen und zentralen Versorgungsschaltglieder ZVS₁, ZVS₂ bzw. LVS sind vorzugsweise Schalter, welche in geschlossenem Zustand eine leitende Verbindung herstellen und in geöffnetem Zustand eine solche unterbinden und werden beispielsweise durch Signale des zentralen Steuergeräts 2 mittelbar oder unmittelbar umgeschaltet.

In Fig.2 ist ein durch ein strichpunktiertes Rechteck begrenztes Druckregelmodul DRM symbolisiert dargestellt. Die Druckregelmodule DRM₁ bis DRMₙ der Ringstruktur 3 sind vorzugsweise alle identisch aufgebaut. CAN-Low und CAN-High ist auf der Ebene eines Druckregelmoduls DRM eingangsseitig und ausgangsseitig je ein lokales Datenbusschaltglied LDBS₁, LDBS₂ zugeordnet. Die lokalen Datenbusschaltglieder LDBS₁, LDBS₂ sind seitenweise gemeinsam umschaltbar, so dass die elektrischen und elektronischen Komponenten 5 des Druckregelmoduls DRM einseitig oder beidseitig an die Zweidrahtleitung 6 des Datenbusses 4 anschließbar sind. Um einen Abschluß des Datenbusses 4 für den Fall bereitzustellen, in welchem die lokalen Datenbusschaltglieder LDBS₁, LDBS₂ auf einer Seite nicht geschlossen sind, ist zwischen CAN-Low und CAN-High ein Busabschlußwiderstand 16 angeordnet. Weiterhin stehen die elektrischen und elektronischen Komponenten 5 des Druckregelmoduls DRM beidseits des lokalen Versorgungsschaltglieds LVS mit der Versorgungsspannungsleitung 10 in Verbindung.

Vor diesem Hintergrund werden die einzelnen Druckregelmodule DRM₁ bis DRMₙ ausgehend von einer Ausgangslage, in welcher sämtliche Datenbusschakglieder ZDBS₁. ZDBS₂ bzw. LDBS₁, LDBS₂ und Versorgungsschaltglieder ZVS₁, ZVS₂ bzw. LVS geöffnet sind, wie folgt initialisiert : Durch Ansteuerung durch das zentrale Steuergerät 2 wird zunächst eines der beiden zentralen Versorgungsschaltglieder ZVS₁, ZVS₂ geschlossen, um eine Umlaufrichtung für das Initialisieren der Druckregelmodule DRM₁ bis DRMₙ innerhalb der Ringstruktur 3 festzulegen. Für eine Initialisierung im Uhrzeigersinn wird beispielsweise das eine zentrale Versorgungsschaltglied ZVS₁ geschlossen. Anschließend erfolgt eine Prüfung des zugeschalteten Abschnitts der Versorgungsspannungsleitung 10, welcher sich bis zum Druckregelmodul DRM₁ erstreckt. Für den Fall, dass kein Fehler, etwa ein Kontaktfehler des Anschlusses der Versorgungsspannungsleitung 10 am Druckregelmodul DRM₁ vorliegt, schließt das zentrale Steuergerät 2 das dem Druckregelmodul DRM₁ zugewandte eine zentrale Datenbusschaltglied ZDBS₁. Hingegen bleiben das andere zentrale Versorgungsschaltglied ZVS₂ und das andere zentrale Datenbusschaltglied ZDBS₂ geöffnet, so dass der Datenbus 4 im Gegenuhrzeigersinn einseitig terminiert ist. Anschließend wird das dem einen zentralen Datenbusschaltglied ZDBS₁ nächst gelegene eine lokale Datenbusschaltglied LDBS₁ des Druckregelmoduls DRM₁ geschlossen und das zentrale Steuergerät 2 steuert ein Initialisierungssignal in den Datenbus 4 ein. Da das andere lokale Datenbusschaltglied LDBS₂ noch nicht geschlossen ist, ist der Datenbus 4 durch den Busabschlußwiderstand 16 des Druckregelmoduls DRM₁ auch auf der anderen Seite abgeschlossen. Die elektronischen Komponenten 5 des Druckregelmoduls DRM₁ erkennen das am Datenbus 4 anliegende Initialisierungssignal und quittieren es an das zentrale Steuergerät 2.

Im Anschluß wird die Fehlerfreiheit der Spannungsversorgung des Druckregelmoduls DRM₂ überprüft, indem das lokale Versorgungsschaltglied LVS des Druckregelmoduls DRM₁ vom zentralen Steuergerät 2 geschlossen und folglich die elektronischen Komponenten 5 des Druckregelmoduls DRM₂ unter Spannung gesetzt werden. Bei fehlerfreier Spannungsversorgung des zwischen dem Druckregelmodul DRM₁ und dem Druckregelmodul DRM₂ gelegenen Abschnitts der Versorgungsspannungsleitung 10 wird das dem Druckregelmodul DRM₁ zugewandte eine lokale Datenbusschaltglied LDBS₁ des Druckregelmoduls DRM₂ geschlossen. Weiterhin wird das dem Druckregelmodul DRM₂ zugewandte andere lokale Datenbusschaltglied LDBS₂ des Druckregelmoduls DRM₁ geschlossen. Beide Aktionen bedingen, dass der Datenbus 4 zu den elektronischen Komponenten 5 des Druckregelmoduls DRM₂ weitergeschleift und Letzteres initialisiert wird. Das Druckregelmodul DRM₁ ignoriert das Initialisierungssignal, da es bereits initialisiert ist. Das Druckregelmodul DRM₂ quittiert anschließend seine Initialisierung an das zentrale Steuergerät 2, welches daraufhin das lokale Versorgungsschaltglied LVS des Druckregelmoduls DRM₂ schließt, um das nächste Druckregelmodul DRM₃ mit Spannung zu versorgen. Die beschriebene Abfolge von Schaltoperationen, d.h. das Zuschalten der Versorgung und des Datenbusses 4 auf ein Druckregelmodul DRM, die Prüfung auf Defekte und das anschließende Senden des Initialisierungssignals werden solange fortgesetzt, bis sämtliche Druckregelmodule DRM₁ bis DRMₙ initialisiert und an den Datenbus 4 angeschlossen sind. Hierbei wird die Ringstruktur 3 nicht geschlossen, d.h. dass das andere lokale Datenbusschaltglied LDBS₂ und das lokale Versorgungsschaltglied LVS des letzten Druckregelmoduls DRMₙ nicht geschlossen werden, weil durch den Busabschlußwiderstand 16 des letzten Druckregelmoduls DRMₙ bereits ein definierter Abschluß vorhanden ist.

Falls im Laufe der Initialisierung ein defektes Druckregelmodul DRM und/oder ein defekter Abschnitt des Datenbusses 4 und/oder ein defekter Abschnitt der Versorgungsspannungsleitung 10 und/oder defekte Anschlüsse detektiert werden, was anhand der an den betreffenden Elementen anliegenden oder von diesen rückgesteuerten Signale durch das zentrale Steuergerät 2 feststellbar ist, so wird das betreffende Druckregelmodul DRM und/oder der betreffende Abschnitt des Datenbusses 4 und/oder der defekte Abschnitt der Versorgungsspannungsleitung 10 nicht in die Ringstruktur 3 integriert, um zu vermeiden, dass diese funktionsunfähig wird.

Wenn etwa das Druckregelmodul DRM₂ einen Fehler in seiner Spannungsversorgung aufweist, beispielsweise bedingt durch einen fehlerhaften Anschlußkontakt in der Versorgungsspannungsleitung 10, was bereits nach dem Schließen des lokalen Versorgungsschaltglieds LVS des Druckregelmoduls DRM₁ feststellbar ist, wird dieses Schaltglied wieder geöffnet, um eine Anbindung des Druckregelmoduls DRM₂ an die Ringstruktur 3 zu verhindern. Falls die Spannungsversorgung des Druckregelmoduls DRM₂ intakt, aber ein Fehler in dessen elektrischen Komponenten 5 vorhanden ist, was durch Schließen des anderen lokalen Datenbusschattglieds LDBS₂ des Druckregelmoduls DRM₁ sowie des einen lokalen Datenbusschaltglieds LDBS₁ des Druckregelmoduls DRM₂ vom zentralen Steuergerät 2 festgestellt werden kann, so werden auch diese Schaltglieder aus demselben Grund wieder geöffnet. Ausgehend von einer Initialisierung im Uhrzeigersinn ist dann das Druckregelmodul DRM₁ das letzte in die Ringstruktur 3 eingebundene Druckregelmodul.

Um die anderen, funktionsfähigen Druckregelmodule DRM₃ bis DRMₙ in die Ringstruktur einzubinden, veranlasst das zentrale Steuergerät 2, dass das andere zentrale Versorgungsschaltglied ZVS₂ sowie das andere zentrale Datenbusschaltglied ZDBS₂ geschlossen wird, um eine Initialisierung im Gegenuhrzeigersinn zu starten. Die Abfolge von Schaltoperationen, d.h. das Zuschalten der Spannungsversorgung und des Datenbusses 4 auf ein Druckregelmodul DRM, die Prüfung auf Defekte und das anschließende Senden des Initialisierungssignals werden dann im Gegenuhrzeigersinn solange fortgesetzt, bis die Druckregelmodule DRMn bis DRM3 initialisiert und an die Ringstruktur 3 angeschlossen sind, soweit nicht ein oder mehrere dieser Druckregelmodule DRM und/oder diesen zugeordnete Leitungsabschnitte Defekte aufweisen. In diesem Fall würde die Initialisierung bereits früher enden.

Wie in dem Fall sämtlich voll funktionsfähiger Druckregelmodule DRM₁ bis DRMₙ und Leitungsabschnitte ist auch im Falle von defekten Elementen die Ringstruktur 3 nicht geschlossen, da das lokale Versorgungsschaltglied LVS und das dem defekten Druckregelmodul zugewandte lokale Datenbusschaltglied LDBS₁ bzw. LDBS₂ des letzten funktionsfähigen Druckregelmoduls geöffnet sind. Die korrekte Terminierung ist auch hier durch den in jedem Druckmodul DRM₁ bis DRMₙ vorhandenen Busabschlußwiderstand 16 gegeben. Selbstverständlich kann der Umlauf innerhalb der Ringstruktur auch im Gegenuhrzeigersinn begonnen und bei Vorliegen eines Defekts im Uhrzeigersinn fortgesetzt werden.

Gemäß einer weiteren Ausführungsform der Erfindung sind in der Versorgungsspannungsleitung 10 keine Versorgungsschaltglieder ZVS₁, ZVS₂, LVS enthalten, ansonsten stimmt die Ringstruktur 3 mit der oben beschriebenen überein. Im Rahmen des Initialisierungsverfahrens der Druckregelmodule DRM₁ bis DRMₙ werden dann ausgehend von einer Ausgangslage, in welcher sämtliche zentrale und lokale Datenbusschaltglieder ZDBS₁, ZDBS₂ bzw. LDBS₁, LDBS₂ geöffnet sind, folgende Schritte hintereinander durchlaufen :
a) Eines der beiden zentralen Datenbusschaltglieder ZDBS₁, ZDBS₂ wird geschlossen,
b) das eine, dem zuletzt geschlossenen Datenbusschaltglied ZDBS₁, ZDBS₂ nächst gelegene lokale Datenbusschaltglied LDBS₁, LDBS₂ eines Druckregelmoduls DRM wird geschlossen,
c) der zugeschaltete Datenbusabschnitt und/oder das zugeschaltete Druckregelmodul DRM wird überprüft und falls
d) kein Fehler im zugeschalteten Datenbusabschnitt und im zugeschalteten Druckregelmodul DRM vorliegt, wird das zugeschaltete Druckregelmodul initialisiert und das andere lokale Datenbusschaltglied LDBS₂ des zugeschalteten Druckregelmoduls DRM geschlossen und das Verfahren beginnend mit Schritt b) solange durchlaufen, bis sämtliche Druckregelmoduln DRM initialisiert sind,
e) ein Fehler im zugeschalteten Druckregelmodul und/oder in dem zugeschalteten Datenbusabschnitt vorhanden ist, wird das eine lokale Datenbusschaltglied LDBS₁ des zugeschalteten Druckregelmoduls wieder geöffnet, das andere zentrale Datenbusschaltglied ZDBS₁. ZDBS₂ geschlossen und das Verfahren beginnend mit Schritt b) solange durchlaufen, bis wenigstens einige der restlichen Druckregelmoduln initialisiert sind.

### Bezugszahlenliste

- 1: Datenbusanordnung
- 2: Steuergerät
- 3: Ringstruktur
- 4: Datenbus
- 5: Elektronische Komponenten
- 6: Zweidrahtleitung Datenbus
- 7: Steuerelektronik
- 8: Versorgungsleitungen
- 10: Versorgungsspannungsleitung
- 12: Energiequelle
- 14: Versorgungsleitung
- 16: Busabschlußwiderstand

## Patentansprüche

1. Initialisierungsverfahren für eine Datenbusanordnung, insbesondere eines Bremssystems eines Fahrzeugs, deren Teilnehmer (2, DRM₁ bis DRMₙ) durch einen Datenbus (4) in einer Ringstruktur (3) miteinander verbunden sind, wobei im Datenbus (4) zwischen den Teilnehmern (2, DRM₁ bis DRMₙ) Datenbusschaltglieder (ZDBS₁, ZDBS₂, LDBS₁, LDBS₂) angeordnet sind und jeder Teilnehmer einen Busabschlusswiderstand (16) aufweist, **dadurch gekennzeichnet, dass** die Ringstruktur (3) ein zentrales Steuergerät (2) beinhaltet, welches zumindest einige der Datenbusschaltglieder (ZDBS₁, ZDBS₂. LDBS₁, LDBS₂) und die anderen Teilnehmer (DRM₁ bis DRMₙ) ansteuert und wobei dem zentralen Steuergerät (2) zwei zentrale Datenbusschaltglieder (ZDBS₁, ZDBS₂) und den anderen Teilnehmern (DRM₁, bis DRMₙ) je zwei lokale Datenbusschaltglieder (LDBS₁, LDBS₂) zugeordnet sind und wobei die Ringstruktur (3) Versorgungsleitungen (8) zur Stromversorgung der Teilnehmer (2, DRM₁ bis DRMₙ) aufweist und in wenigstens einer Versorgungsleitung (10) zwei zentrale Versorgungsschaltglieder (ZVS₁, ZVS₂) angeordnet und für zumindest einige der Teilnehmer (DRM₁ bis DRMₙ) je ein lokales Versorgungsschaltglied (LVS) angeordnet ist, und ausgehend von einer Ausgangslage, in welcher sämtliche Datenbusschaltglieder (ZDBS₁, ZDBS₂, LDBS₁, LDBS₂) und die Versorgungsschaltglieder (ZVS₁, ZVS₂, LVS) geöffnet sind, folgende Schritte hintereinander durchlaufen werden:
a) Eines der beiden zentralen Versorgungsschaltglieder (ZVS₁, ZVS₂) und das der Umlaufrichtung entsprechende zentrale Datenbusschaltglied (ZDBS₁, ZDBS₂) werden geschlossen,
b) das eine, dem zuletzt geschlossenen Datenbusschaltglied nächst gelegene lokale Datenbusschaltglied (LDBS₁, LDBS₂) eines Teilnehmers wird geschlossen,
c) der zugeschaltete Datenbusabschnitt und der zugeschaltete Versorgungsleitungsabschnitt und der zugeschaltete Teilnehmer wird überprüft und falls
d) kein Fehler im zugeschalteten Datenbusabschnitt und im zugeschalteten Versorgungsleitungsabschnitt und im zugeschalteten Teilnehmer vorliegt, wird der zugeschaltete Teilnehmer initialisiert und das andere lokale Datenbusschaltglied (LDBS₁, LDBS₂) und das lokale Versorgungsschaltglied (LVS) des zugeschalteten Teilnehmers geschlossen und das Verfahren beginnend mit Schritt b) solange durchlaufen, bis sämtliche Teilnehmer initialisiert sind,
e) ein Fehler in dem zugeschalteten Datenbusabschnitt und/oder im zugeschalteten Versorgungsleitungsabschnitt und/oder im zugeschalteten Teilnehmer vorhanden ist, wird das eine lokale Datenbusschaltglied (LDBS₁, LDBS₂) des zugeschalteten Teilnehmers und das zuletzt geschlossene Versorgungsschaltglied (ZVS₁, ZVS₂, LVS) wieder geöffnet, das andere zentrale Datenbusschaltglied (ZDBS₁, ZDBS₂) und das andere zentrale Versorgungsschaltglied (ZVS₁, ZVS₂) geschlossen und das Verfahren beginnend mit Schritt b) solange durchlaufen, bis wenigstens einige der restlichen Teilnehmer initialisiert sind.

2. Initialisierungsverfahren nach Anspruch 1, **dadurch gekennzeichnet, dass** zumindest einige der Teilnehmer als identische Druckregelmodule (DRM₁ bis DRMₙ) Bremsdrücke einregeln.

3. Initialisierungsverfahren nach wenigstens einem der vorhergehenden Ansprüche, **dadurch gekennzeichnet, dass** der Datenbus ein CAN (Controller Area Network)-Datenbus ist.

4. Initialisierungsverfahren nach wenigstens einem der vorhergehenden Ansprüche, **dadurch gekennzeichnet, dass** der Busabschlusswiderstand (16) zwischen einer CAN-High-Leitung und einer CAN-Low-Leitung des CAN-Datenbuses geschaltet ist.

## Claims

1. Initialization method for a databus arrangement, in particular of a brake system of a vehicle whose users (2, DRM₁ to DRMₙ) are connected to one another by means of a databus (4) in a ring structure (3), with databus switching elements (ZDBS₁, ZDBS₂, LDBS₁, LDBS₂) being arranged in the databus (4) between the users (2, DRM₁ to DRMₙ) and each user having a bus terminating resistor (16), **characterized in that** the ring structure (3) contains a central control unit (2) which actuates at least some of the databus switching elements (ZDBS₁, ZDBS₂, LDBS₁, LDBS₂) and the other users (DRM₁ to DRMₙ), with two central databus switching elements (ZDBS₁, ZDBS₂) being assigned to the central control unit (2) and in each case two local databus switching elements (LDBS₁, LDBS₂) being assigned to the other users (DRM₁ to DRMₙ), and with the ring structure (3) having supply lines (8) for supplying power to the users (2, DRM₁ to DRMₙ), and two central supply switching elements (ZVS₁, ZVS₂) being arranged in at least one supply line (10) and in each case a local supply switching element (LVS) being arranged for at least some of the users (DRM₁ to DRMₙ), and the following steps being run through in succession starting from an initial position in which all the databus switching elements (ZDBS₁, ZDBS₂, LDBS₁, LDBS₂) and the supply switching elements (ZVS₁, ZVS₂, LVS) are opened:
a) one of the two central supply switching elements (ZVS₁, ZVS₂) and the central databus switching element (ZDBS₁, ZDBS₂) which correspond to the circulation direction are closed,
b) the one local databus switching element (LDBS₁, LDBS₂), located closest to the databus switching element closed last, of a subscriber is closed,
c) the databus section connected into the circuit and the supply line section connected into the circuit and the user connected into the circuit are checked and if
d) there is no fault in the databus section connected into the circuit or in the supply line section connected into the circuit or in the user connected into the circuit, the user which is connected into the circuit is initialized and the other local databus switching element (LDBS₁, LDBS₂) and the local supply switching element (LVS) of the user which is connected into the circuit are closed and the method is run through, starting with step b), until all the users are initialized,
e) a fault is present in the databus section which is connected into the circuit and/or in the supply line section which is connected into the circuit and/or in the user which is connected into the circuit, the one local databus switching element (LDBS₁, LDBS₂) of the user which is connected into the circuit and the supply switching element (ZVS₁, ZVS₂, LVS) closed last is opened again, the other central databus switching element (ZDBS₁, ZDBS₂) and the other central supply switching element (ZVS₁, ZVS₂) are closed and the method is run through, starting at step b), until at least some of the remaining users are initialized.

2. Initialization method according to Claim 1, **characterized in that** at least some of the users apply brake pressures as identical pressure regulating modules (DRM₁ to DRMₙ) .

3. Initialization method according to at least one of the preceding claims, **characterized in that** the databus is a CAN (Controller Area Network) databus.

4. Initialization method according to at least one of the preceding claims, **characterized in that** the bus terminating resistor (16) is connected between a CAN highline and a CAN lowline of the CAN databus.

## Revendications

1. Procédé d'initialisation pour un arrangement de bus de données, notamment un système de freinage d'un véhicule dont les postes (2, DRM₁ à DRMₙ) sont reliés entre eux par un bus de données (4) dans une structure en anneau (3), des éléments de commutation de bus de données (ZDBS₁, ZDBS₂, LDBS₁, LDBS₂) étant disposés dans le bus de données (4) entre les postes (2, DRM₁ à DRMₙ) et chaque poste présentant une résistance de terminaison de bus (16), **caractérisé en ce que** la structure en anneau (3) comprend une commande centrale (2) qui commande au moins certains des éléments de commutation de bus de données (ZDBS₁, ZDBS₂, LDBS₁, LDBS₂) et les autres postes (DRM₁ à DRMₙ) et deux éléments de commutation de bus de données centraux (ZDBS₁, ZDBS₂) étant associés à la commande centrale (2) et deux éléments de commutation de bus de données locaux (LDBS₁, LDBS₂) étant à chaque fois associés aux autres postes (DRM₁ à DRMₙ) et la structure en anneau (3) présentant des lignes d'alimentation (8) pour l'alimentation électrique des postes (2, DRM₁ à DRMₙ) et deux éléments de commutation d'alimentation centraux (ZVS₁, ZVS₂) étant disposés dans au moins une ligne d'alimentation (10) et un élément de commutation d'alimentation local (LVS) étant à chaque fois disposé pour au moins certains des postes (DRM₁ à DRMₙ), et en partant d'une situation initiale dans laquelle tous les éléments de commutation de bus de données (ZDBS₁, ZDBS₂, LDBS₁, LDBS₂) et les éléments de commutation d'alimentation (ZVS₁, ZVS₂, LVS) sont ouverts, les étapes suivantes sont exécutées l'une après l'autre :
a) L'un des deux éléments de commutation d'alimentation centraux (ZVS₁, ZVS₂) et l'élément de commutation de bus de données central (ZDBS₁, ZDBS₂) qui correspond au sens périphérique sont fermés,
b) L'élément de commutation de bus de données local (LDBS₁, LDBS₂) d'un poste le plus proche de l'élément de commutation de bus de données fermé en dernier est fermé,
c) La section de bus de données mise en circuit et la section de ligne d'alimentation mise en circuit et le poste mis en circuit sont contrôlés et si
d) Aucun défaut n'est présent dans la section de bus de données mise en circuit et la section de ligne d'alimentation mise en circuit et le poste mis en circuit, le poste mis en circuit est initialisé et l'autre élément de commutation de bus de données local (LDBS₁, LDBS₂) ainsi que l'élément de commutation d'alimentation local (LVS) du poste mis en circuit est fermé et le procédé se répète en recommençant à l'étape b) jusqu'à ce que tous les postes soient initialisés,
e) Un défaut est présent dans la section de bus de données mise en circuit et/ou la section de ligne d'alimentation mise en circuit et/ou le poste mis en circuit, l'élément de commutation de bus de données local (LDBS₁, LDBS₂) du poste mis en circuit et l'élément de commutation d'alimentation (ZVS₁, ZVS₂, LVS) fermé en dernier sont de nouveau ouverts, l'autre élément de commutation de bus de données central (ZDBS₁, ZDBS₂) et l'autre élément de commutation d'alimentation central (ZVS₁, ZVS₂) est fermé et le procédé se répète en recommençant à l'étape b) jusqu'à ce q'au moins certains des postes restants soient initialisés.

2. Procédé d'initialisation selon la revendication 1, **caractérisé en ce qu'**au moins certains des postes font office de modules régulateurs de pression identiques (DRM₁ à DRMₙ) et régulent les pressions de freinage.

3. Procédé d'initialisation selon au moins l'une des revendications précédentes, **caractérisé en ce que** le bus de données est un bus de données CAN (Controller Area Network) .

4. Procédé d'initialisation selon au moins l'une des revendications précédentes, **caractérisé en ce que** la résistance de terminaison de bus (16) est branchée entre une ligne CAN au niveau haut et une ligne CAN au niveau bas du bus de données CAN.
